# EUROPÄISCHE PATENTSCHRIFT

(11) **EP 3 164 271 B1**
(45) Veröffentlichungstag und Bekanntmachung des Hinweises auf die Patenterteilung: **11.07.2018**
(21) Anmeldenummer: 15722157.3
(22) Anmeldetag: 07.05.2015
(51) Int. Cl.: B60C 11/12

(54) **FAHRZEUGLUFTREIFEN**
PNEUMATIC VEHICLE TYRE
PNEU DE VÉHICULE

(30) Priorität: 03.07.2014 DE 102014212902
(43) Veröffentlichungstag der Anmeldung: 10.05.2017
(73) Patentinhaber: Continental Reifen Deutschland GmbH, 30165 Hannover (DE)
(72) Erfinder: WIESE, Klaus, 30559 Hannover (DE); SENG, Matthias, 30453 Hannover (DE)
(74) Vertreter: Finger, Karsten
(86) Internationale Anmeldenummer: PCT/EP2015/060033
(87) Internationale Veröffentlichungsnummer: WO 2016/000854

(56) Entgegenhaltungen:
- EP-A1- 1 829 712
- EP-A2- 1 428 688
- JP-A- 2006 151 222
- JP-A- 2006 151 225
- JP-A- 2006 151 237
- JP-A- 2006 327 245

## Beschreibung

Die Erfindung betrifft ein Laufstreifenprofil eines Fahrzeugluftreifens mit durch Profilrillen von einander beabstandeten Profilblockelementen, welche in radialer Richtung nach außen hin jeweils durch eine radial äußere, die Bodenkontaktfläche bildende Oberfläche begrenzt sind, wobei in der radial äußeren Oberfläche zumindest mancher Profilblockelemente längs einer ersten Haupterstreckungsrichtung hintereinander angeordnet mehrere zusätzliche Feinrillen angeordnet sind, die längs einer zweiten Haupterstreckungsrichtung erstreckt und mit einer Rillenbreite B_{F} und mit einer Rillentiefe T_{F} ausgebildet sind.

Derartige Laufstreifenprofile sind bekannt. Es ist bekannt, Laufstreifenprofile mit Profilblockelementen auszubilden, die durch Profilrillen begrenzt werden. Die Rillen sind mit einer Rillenbreite von mehr als zwei Millimetern und mit einer Rillentiefe von mehreren Millimetern ausgebildet. Die in dieser Weise mit ausgeprägter Breite und Tiefe ausgebildeten Rillen ermöglichen sowohl eine Entkopplung der Profilblockelemente und somit eine Verbesserung des Rollwiderstandes als auch den Abtransport des Wassers aus dem Bereich des Laufstreifenprofiles. Die zwischen den Rillen ausgebildeten und von diesen begrenzten Profilblockelemente sind je nach Abstand der sie begrenzenden Rillen voneinander mit ausreichender Steifigkeit ausgebildet, um die gewünschten Traktions-, Brems- und Handlingeigenschaften des Fahrzeugluftreifens sicher umzusetzen. Dabei ist es wünschenswert, das zwischen den Rillen ausgebildete Profilblockelement mit einer hohen Steifigkeit sowohl in Umfangsrichtung als auch in axialer Richtung A auszubilden, um die beim Handling, beim Bremsen und beim Beschleunigen zwischen Straßenoberfläche und radial äußerer Oberfläche des Profilblockelementes einwirkenden Kraft möglichst optimal zu übertragen.

Sowohl beim Bremsen als auch beim Beschleunigen wirken längs der Erstreckung des Profilblockelementes Druckunterschiede auf die radial äußere Oberfläche. Der bei der Gleitbewegung zwischen Straße und radial äußerer Oberfläche in Gleitrichtung vordere Erstreckungsabschnitt wird aufgrund der höheren Kompression stärker komprimiert, der in Gleitrichtung nachgeordnete, rückwärtige Erstreckungsabschnitt wird weniger stark komprimiert. Bei den dynamischen Fahrzuständen Bremsen, Handling und Beschleunigen erfolgt somit jeweils eine längs der Erstreckung des Profilblockelementes in Gleitrichtung unterschiedliche Kraftübertragungsverteilung am Profilblockelement. Um eine ausreichende Kraftübertragung zu sichern, werden die Profilblockelemente üblicher Weise möglichst steif ausgebildet und die die Profilblockelemente begrenzenden Rillen hierzu in einem entsprechend großen Abstand zueinander angeordnet.

Es ist auch bekannt, in der radial äußeren Oberfläche eines Profilblockelementes zusätzliche Feineinschnitte (sipes) auszubilden. Die Feineinschnitte dienen im Wesentlichen dazu, beim Abrollen durch Öffnen und Schließen zusätzliche Griffkanten zur Erzielung eines besseren Griffs auf Wasser oder Schnee zu erzielen. Bei Winterreifen dienen die Feineinschnitte auch dazu während des Abrollens durch den im Zyklus aus Öffnen und Schließen des Feineinschnitts im Feineinschnitt eingeschlossenen Schnee mithilfe von Schnee-Schnee-Reibung den Schneegriff zu verbessern. Feineinschnitte sind mit einer Breite ausgebildet, die größer als 0,4 mm und bei PKW-Reifen kleiner als 2 mm ist. Die Feineinschnitte sind üblicherweise mit einer Tiefe von mehreren Millimetern ausgebildet.

Fahrzeugluftreifen rollen beim Beschleunigen oder Bremsen eines Fahrzeuges oder beim Aufnehmen von Seitenkräften während des Handlings mit Schlupf über die Straßenoberfläche. Dabei wird durch die Reibwärme zwischen Profilblockelement und Eis durch Aufschmelzen des Eises ein Flüssigkeitsfilm gebildet. Dieser führt zu einer deutlichen Abnahme der zwischen Profilblockelement und Straßenoberfläche übertragbaren Reibkräfte. Die Abnahme ist unter anderem abhängig von der Gleitgeschwindigkeit und von der Höhe des Wasserfilms.

Es ist bekannt, in der radial äußeren Oberfläche des Fahrzeugluftreifens mithilfe von Feineinschnitten und den hierdurch erzeugten Griffkanten den Wasserfilm wegzuwischen.

Es ist auch bekannt, zusätzliche feine Strukturen - beispielsweise Feinrillen - in der radial äußeren Oberfläche eines Profilblockelementes zur Aufnahme des Wasserfilmes auszubilden. Dabei sind bisherige bekannte Oberflächenstrukturen im Wesentlichen gleichmäßig angeordnet. Da der zwischen Profilblockelement und Eisoberfläche gebildete Wasserfilm jedoch längs der Erstreckung des Profilblockelementes nicht mit konstanter Höhe ausgebildet ist, sind derartige gleichmäßig verteilte Strukturen und der hierdurch gleichmäßig verteilten Aufnahmekapazität zur Aufnahme von Wasser ungünstig.

Beim Bremsen ist die Gleitrichtung die Fahrtrichtung des Fahrzeuges, beim Beschleunigen ist die Gleitrichtung die Gegenfahrtrichtung. Bei Fahrmanövern, in welchen die Querkraftübertragung zum Quergleiten führt, beispielsweise beim Handling, ist jeweils die entsprechend dem Fahrmanöver zur axialen Außenseite des abrollenden Fahrzeugluftreifens weisende Richtung die jeweilige Gleitrichtung. An dem in Gleitrichtung zwischen zwei benachbarten Rillen oder zwei benachbarten Feineinschnitten eines Profilblockelementes vorderen Erstreckungsabschnitt eines Oberflächenelementes ist der gebildete Wasserfilm jeweils mit geringerer Dicke ausgebildet als an seinem in Gegenrichtung ausgebildeten Erstreckungsende des Oberflächenelementes. Die bisherigen gleichmäßigen Verteilungen der Oberflächenstrukturen ermöglichen jedoch lediglich ein gleichmäßiges Aufnehmen des Wasserfilmes. Im Erstreckungsabschnitt mit großer Wasserfilmdicke kann hierdurch nur zu wenig Wasser aufgenommen werden. Im Erstreckungsabschnitt mit geringer Wasserfilmdicke ist noch Kapazität ungenutzt vorhanden.

Aus der EP 1829712 A1 ist **ein Laufstreifenprofil gemäß den Merkmalen des Oberbegriffs vor Anspruch 1 bekannt, bei dem** in der radial äußeren Oberfläche von Profilelementen Feinrillen mit unterschiedlichen Abständen zueinander auszubilden oder in ihrer Tiefe zu variieren.

**Aus der** EP 1428688 A2 **ist es bekannt, herkömmliche Feineinschnitte in Profilblockelementen zur Profilblockmitte hin mit zunehmender Breite auszubilden. Aus der** JP 2006151225 A **ist es bekannt, bei einem Laufstreifenprofil mit axial nebeneinander angeordneten Profilelementen, in den in der Reifenschulter ausgebildeten Profilelementen und in den zentralen Profilelementen jeweils zusätzliche Feinrillen auszubilden, wobei die in der Reifenschulter ausgebildeten Feinrillen schmaler ausgebildet sind als die Feinrillen in den zentralen Profilelementen.**

Der Erfindung liegt die Aufgabe zugrunde, bei einem derartigen Laufstreifenprofil mit einfachen Mitteln die Möglichkeit zu schaffen, die Wasseraufnahmekapazität im Bereich von Profilblockelementen an die individuellen Anforderungen an das jeweilige Profilblockelement besser zu verteilen.

Die Aufgabe wird erfindungsgemäß durch die Ausbildung eines Laufstreifenprofils eines Fahrzeugluftreifens mit durch Profilrillen von einander beabstandeten Profilblockelementen, welche in radialer Richtung nach außen hin jeweils durch eine radial äußere, die Bodenkontaktfläche bildende Oberfläche begrenzt sind, wobei in der radial äußeren Oberfläche zumindest mancher Profilblockelemente längs einer ersten Haupterstreckungsrichtung hintereinander angeordnet mehrere zusätzliche Feinrillen angeordnet sind, die längs einer zweiten Haupterstreckungsrichtung erstreckt und mit einer Rillenbreite B_{F} und mit einer Rillentiefe T_{F} ausgebildet sind, gemäß den Merkmalen von Anspruch 1 gelöst, bei dem die Rillenbreite B_{F} mit 0,05mm≤B_{F}≤0,4mm und die Rillentiefe T_{F} mit 0,6mm≥T_{F}≥0,05mm ausgebildet sind, und bei dem zumindest die innerhalb eines Oberflächenabschnitts der radial äußeren Oberfläche eines Profilblockelementes hintereinander angeordneten Feinrillen mit unterschiedlicher Rillenbreite B_{F} ausgebildet sind, wobei die Rillenbreite B_{F} dieser im Oberflächenabschnitt hintereinander angeordneten Feinrillen in einer ersten Orientierung der ersten Haupterstreckungsrichtung gesehen längs der Erstreckung des Oberflächenabschnittes - insbesondere von Feinrille zu Feinrille - zunimmt.

Hierdurch wird es ermöglicht, dass ein Oberflächenabschnitt des Profilblockelementes entsprechend dem für diesen Oberflächenabschnitt gewünschten Kraftübertragungsverlauf auf Eis ausgebildet werden kann. Der Oberflächenabschnitt kann mithilfe der gezielten Anordnung von Feinrillen unterschiedlicher Rillenbreite mit einer Aufnahmekapazität des Schmelzwasserfilms ausgebildet werden, der der wesentlichen Kraftübertragung dieses Oberflächenabschnittes auf Eis entsprechen soll. Hierzu wird der Abschnitt des Oberflächenabschnitts mit größeren Rillenbreiten dem diesem Kraftübertragungszustand beim Gleiten hinteren Oberflächenabschnitt zugeordnet und die Rillen und die Feinrillen mit kleineren Rillenbreiten dem in Gleitrichtung vorderen Oberflächenabschnitt. Somit kann der beim Gleiten auf Eis gebildete Wasserfilm mit seiner Dickenverteilung aufgrund der dieser Dickenverteilung entsprechend ausgebildeten Breitenverteilung der Feinrillen wirksamer von der Oberflächenstruktur der radial äußeren Oberfläche des Profiblockelementes aufgenommen werden.

Besonders vorteilhaft ist die Ausbildung eines Laufstreifenprofils gemäß den Merkmalen von Anspruch 2, wobei die zumindest innerhalb dieses Oberflächenabschnittes der radial äußeren Oberfläche des Profilblockelementes hintereinander angeordneten Feinrillen zusätzlich mit unterschiedlicher Rillentiefe T_{F} ausgebildet sind, wobei die Rillentiefe T_{F} dieser im Oberflächenabschnitt hintereinander angeordneten Feinrillen in der ersten Orientierung der ersten Haupterstreckungsrichtung gesehen - insbesondere von Feinrille zu Feinrille - zunimmt. Hierdurch kann eine verbesserte Aufnahmekapazität ohne schlagartigen Verlust während des Abriebes umgesetzt werden.

Besonders vorteilhaft ist die Ausbildung eines Laufstreifenprofils gemäß den Merkmalen von Anspruch 3, wobei in erster Haupterstreckungsrichtung gesehen benachbart hintereinander angeordnete Feinrillen im Abstand a_{F} mit 0,05mm≤a_{F}≤5,0mm zueinander angeordnet sind, und wobei insbesondere die Abstände a_{F} der jeweils benachbart hintereinander angeordneten Feinrillen zumindest innerhalb dieses Oberflächenabschnittes der radial äußeren Oberfläche des Profilblockelementes zusätzlich unterschiedlich groß ausgebildet sind, wobei der Abstand a_{F} dieser im Oberflächenabschnitt jeweils benachbart hintereinander angeordneten Feinrillen in der ersten Orientierung der ersten Haupterstreckungsrichtung gesehen von Abstand a_{F} zweier benachbart angeordneten Feinrillen zum Abstand der nächsten, benachbart angeordneten Feinrillen hin abnimmt. Dies ermöglicht eine optimal angepasste Auslegung an bestimmte, gewünschte Temperaturbereiche, da die Wasserfilmbildung stark von der Umgebungstemperatur abhängt.

Besonders vorteilhaft ist die Ausbildung eines Laufstreifenprofils gemäß den Merkmalen von Anspruch 4, wobei die Feinrillen in der radial äußeren Oberfläche geradlinig erstreckt ausgebildet sind. Dies begünstigt eine einfache Fertigung.

Besonders vorteilhaft ist die Ausbildung eines Laufstreifenprofils gemäß den Merkmalen von Anspruch 5, wobei die Feinrillen in der radial äußeren Oberfläche über die gesamte in der Position der Feinrille, längs der zweiten Haupterstreckungsrichtung ausgebildete Erstreckungslänge des Profilblockelementes erstreckt ausgebildet sind. Dies begünstigt eine optimierte Ausbildung für die Kraftübertragung in erster Haupterstreckungsrichtung. So kann in einfacher Weise eine Optimierung der Hauptbelastungsrichtung für Seitenführung oder Traktion bzw. Bremsen umgesetzt werden.

Besonders vorteilhaft ist die Ausbildung eines Laufstreifenprofils gemäß den Merkmalen von Anspruch 6, wobei der Oberflächenabschnitt durch längs der ersten Haupterstreckungsrichtung durch das Profilblockelement begrenzende Rillen und/oder durch in der radial äußeren Oberfläche hintereinander angeordnete Feineinschnitte begrenzt wird. Dies begünstigt eine optimierte Ausbildung für die Kraftübertragung in erster Haupterstreckungsrichtung. So kann in einfacher Weise eine Optimierung der Hauptbelastungsrichtung für Seitenführung oder Traktion bzw. Bremsen umgesetzt werden.

Besonders vorteilhaft ist die Ausbildung eines Laufstreifenprofils gemäß den Merkmalen von Anspruch 7, wobei in der Oberfläche des Profilblockelementes längs der ersten Haupterstreckungsrichtung hintereinander mehrere derartige Oberflächenelemente ausgebildet sind. Die Ausbildung ermöglicht eine einfache Sicherstellung, dass trotz Überlagerung von Rolleffekten und Gleiteffekten am schlupfenden Reifen immer wieder optimierte Teilbereiche in Eingriff kommen.

Besonders vorteilhaft ist die Ausbildung eines Laufstreifenprofils gemäß den Merkmalen von Anspruch 8, wobei die erste Haupterstreckungsrichtung die Umfangsrichtung U des Reifens und die zweite Haupterstreckungsrichtung die axiale Richtung A des Reifens ist. Die senkrecht zur Gleitrichtung angeordneten Feinrillen ermöglichen die beste Wasseraufnahme durch Wischeffekte und optimiertes Aufnahmevolumen für sicheres Bremsen bzw. Traktion auf Eis.

Besonders vorteilhaft ist die Ausbildung eines Laufstreifenprofils gemäß den Merkmalen von Anspruch 9, wobei die erste Haupterstreckungsrichtung die axiale Richtung A des Reifens und die zweite Haupterstreckungsrichtung die Umfangsrichtung U des Reifens ist. Die senkrecht zur Gleitrichtung angeordneten Feinrillen ermöglichen die beste Wasseraufnahme durch Wischeffekte und optimiertes Aufnahmevolumen für sichere Kurvenfahrt auf Eis.

Im Sinne der Erfindung ist eine Rille mit einer in der radial äußeren Oberfläche der die Rille begrenzenden Profilelemente gemessenen Rillenbreite ausgebildet, welche größer als 2 mm ist.

Im Sinne der Erfindung ist ein Feineinschnitt (sipe) mit einer in der radial äußeren Oberfläche des Profilelementes gemessenen Breite ausgebildet, welche zwischen 0,4 und 2,0 mm ist.

Im Sinne der Erfindung ist eine Feinrille mit einer in der radial äußeren Oberfläche des Profilelementes gemessenen Breite B_{F} ausgebildet mit 0,05 mm ≤ B_{F} < 0,4 mm.

Die Erfindung wird im Folgenden an Hand der in den Figuren 1 bis 11 dargestellten Ausführungsbeispiele näher erläutert. Hierin zeigen
- Fig.1: einen Laufstreifenprofilabschnitt eines Fahrzeugluftreifens in Draufsicht,
- Fig.2: die Darstellung eines Profilblockelementes von Fig.1 in Schnittdarstellung gemäß Schnitt II-II von Fig.1,
- Fig.3: die Darstellung eines Laufstreifenprofilabschnitts in Draufsicht mit alternativer Ausbildung eines Profilblockelementes,
- Fig.4: ein Profilblockelement von Fig.3 in Schnittdarstellung gemäß Schnitt IV-IV von Fig.3,
- Fig.5: einen Ausschnitt des Profilblockelementes von Fig.4 in vergrößerter Detaildarstellung des Details V von Fig.4,
- Fig.6: die Darstellung eines Profilblockelementes in Draufsicht analog zur Darstellung von Fig.1 und Fig.3 mit alternativer Ausbildung der Oberflächengestaltung,
- Fig.7: eine Draufsicht auf ein Profilblockelement mit weiterer alternativer Ausbildung der Oberflächengestaltung,
- Fig.8: eine Draufsicht auf ein Profilblockelement mit weiterer alternativer Ausbildung der Oberflächengestaltung,
- Fig.9: eine Draufsicht auf ein Profilblockelement mit weiterer alternativer Ausbildung der Oberflächengestaltung,
- Fig.10: eine Querschnittsdarstellung eines Profilblockelementes von Fig.2 jedoch in Berührkontakt zu einer beeisten Straßenoberfläche und
- Fig.11: eine Querschnittdarstellung eines Profilblockelementes von Fig.2 in anderer Ausführung in Berührkontakt zur beeisten Straßenoberfläche.

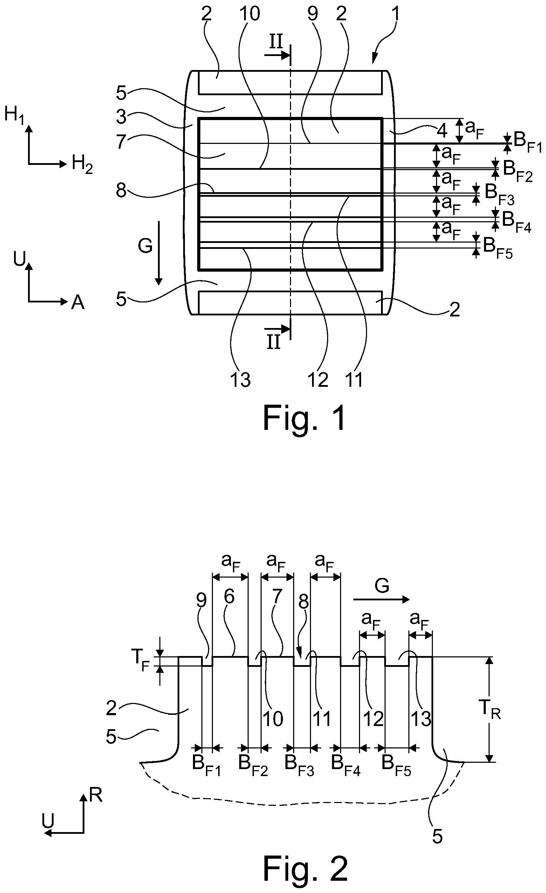

Die Figuren 1 und 2 zeigen einen Ausschnitt eines Laufstreifenprofils eines Fahrzeugluftreifens für PKW (Personenkraftwagen) mit einer Profilblockreihe 1 bekannter Art, welche in Umfangsrichtung U des Fahrzeugluftreifens ausgerichtet und über den gesamten Umfang des Fahrzeugluftreifens erstreckt ausgebildet ist. Die Profilblockreihe 1 ist in bekannter Weise aus in Umfangsrichtung U des Fahrzeugluftreifens hintereinander angeordneten und jeweils durch Querrillen 5 voneinander beabstandeten, radial erhabenen Profilblockelementen 2 ausgebildet. Die Profilblockreihe 1 ist in bekannter Weise in axialer Richtung A des Fahrzeugluftreifens zur einen axialen Seite hin durch eine Umfangsrille 3 und zur anderen axialen Seite hin durch eine Umfangsrille 4 begrenzt. Die Umfangsrillen 3 und 4 erstrecken sich in bekannter Weise über den gesamten Umfang des Fahrzeugluftreifens und sind in Umgangsrichtung U des Fahrzeugluftreifens ausgerichtet. Die Querrillen 5 erstrecken sich in axialer Richtung jeweils ausgehend von der Umfangsrille 3 bis zur Umfangsrille 4. Die Profilblockelemente 2 sind in radialer Richtung R des Fahrzeugluftreifens nach außen hin durch eine die Bodenkontaktoberfläche bildende, radial äußere Oberfläche 6 begrenzt. Die radial äußere Oberfläche 6 eines Profilblockelementes 2 erstreckt sich in Umfangsrichtung U des Fahrzeugluftreifens von der das Profilblockelement 2 zur einen Orientierung in Umfangsrichtung U hin begrenzenden Querrille 5 bis zu der das Profilblockelement 2 zur anderen Orientierung in Umfangsrichtung U hin begrenzenden Querrille 5 und in axialer Richtung A von der das Profilblockelement 2 begrenzenden Umfangsrille 3 bis zu der das Profilblockelement 2 begrenzenden Umgangsrille 4.

In den Figuren ist eine erste Haupterstreckungsrichtung H₁ und eine senkrecht hierzu ausgebildete zweite Haupterstreckungsrichtung H₂ eingetragen. In den Darstellungen ist dabei die erste Haupterstreckungsrichtung H₁ die Umfangsrichtung U des Reifens und die zweite Haupterstreckungsrichtung H₂ die axiale Richtung A des Reifens

In den Figuren 1 und 2 ist eine in die Haupterstreckungsrichtung H₁ und somit in Umfangsrichtung U gewählte Orientierungsrichtung G eingetragen.

Die radial äußere Oberfläche 6 bildet in dem in den Figuren 1 und 2 dargestellten Ausführungsbeispiel ein einziges Oberflächenelement 7, welches sich zwischen den beiden das Profilblockelement 2 begrenzenden Querrillen 5 in Umfangsrichtung U und in axialer Richtung A zwischen der Umfangsrille 3 und 4 erstreckt. In dem Oberflächenelement 7 ist eine Gruppe 8 von in Orientierungsrichtung G gesehen hintereinander angeordnet geradlinig erstreckte, parallele Feinrillen 9, 10, 11, 12 und 13 ausgebildet. Die Feinrille 9 ist mit einer in der radial äußeren Oberfläche 6 gemessenen Breite B_{F1}, die Feinrille 10 mit einer Breite B_{F2}, die Feinrille 11 mit einer Breite B_{F3}, die Feinrille 12 mit einer Breite B_{F4} und die Feinrille 13 mit einer Breite B_{F5} ausgebildet. Dabei ist ausgehend von der das Oberflächenelement 7 in Haupterstreckungsrichtung H₁ und somit in Umfangsrichtung U hin begrenzenden, einen Querrille 5 die dieser Querrille 5 in Orientierungsrichtung G nächstgelegene Feinrille 9 in einem in der radial äußeren Oberfläche 7 gemessenen Abstand a_{F} von der Querrille 5 angeordnet. In Orientierungsrichtung G der Feinrille 9 benachbart nachgeordnet ist die Feinrille 10 im Abstand a_{F} zur Feinrille 9 angeordnet. In Orientierungsrichtung G der Feinrille 10 benachbart nachgeordnet ist im Abstand a_{F} die Feinrille 11 angeordnet. Der Feinrille 11 in Orientierungsrichtung G benachbart nachgeordnet ist im Abstand a_{F} die Feinrille 12 angeordnet. In Orientierungsrichtung G der Feinrille 12 nachgeordnet ist die Feinrille 13 im Abstand a_{F} zur Feinrille 12 angeordnet. Im Abstand a_{F} zur Feinrille 13 dieser in Orientierungsrichtung G nachgeordnet ist die zweite das Oberflächenelement 7 längs der Haupterstreckungsrichtung H₁ begrenzende Querrille 5 angeordnet.

Wie in Figur 2 dargestellt ist, sind die Feinrillen 9, 10, 11, 12, 13 ausgehend von der radial äußeren Oberfläche 7 in radialer Richtung nach innen hin mit einer Feinrillentiefe T_{F} ausgebildet. Die im Oberflächenelement 7 in Orientierungsrichtung G hintereinander angeordneten Feinrillen 9, 10, 11, 12, 13 sind dabei mit unterschiedlichen Breiten B_{F1}, B_{F2}, B_{F3}, B_{F4}, B_{F5} ausgebildet, wobei längs der Orientierungsrichtung G von Feinrille zur nächsten Feinrille die Breite jeweils zunimmt. Im dargestellten Ausführungsbeispiel ist somit B_{F1} < B_{F2} < B_{F3} < B_{F4} < B_{F5} ausgebildet.

Im dargestellten Ausführungsbeispiel sind die Tiefen T_{F} der Feinrillen 9, 10, 11, 12, 13 jeweils gleichgroß ausgebildet. Ebenso sind im dargestellten Ausführungsbeispiel die Abstände ap jeweils gleichgroß ausgebildet.

Im Sinne der Erfindung ist eine Rille mit einer in der radial äußeren Oberfläche der die Rille begrenzenden Profilelemente gemessenen Rillenbreite ausgebildet, welche größer als 2 mm ist.

Im Sinne der Erfindung ist ein Feineinschnitt (sipe) mit einer in der radial äußeren Oberfläche des Profilelementes gemessenen Breite ausgebildet, welche zwischen 0,4 und 2,0 mm ist.

Im Sinne der Erfindung ist eine Feinrille mit einer in der radial äußeren Oberfläche des Profilelementes gemessenen Breite B_{F} ausgebildet mit 0,05 mm ≤ B_{F} < 0,4 mm.

Wie in Figur 2 zu erkennen ist, sind die Querrillen 5 mit einer von der radial äußeren Oberfläche 6 der angrenzenden Profilblockelemente 2 aus in radialer Richtung R gemessenen Tiefe T_{R} ausgebildet mit 5 mm ≤ T_{R} ≤ 11 mm beispielsweise mit T_{R} = 8 mm.

Die Breiten B_{F1}, B_{F2}, B_{F3}, B_{F4}, B_{F5} sind dabei jeweils kleiner als 0,4 mm ausgebildet. Die schmalste Feinrille 9 ist mit einer Breite B_{F1} ≥ 0,05 mm ausgebildet. Beispielsweise ist B_{F1} = 0,05 mm, B_{F2} = 0,08 mm, B_{F3} = 0,12 mm, B_{F4} = 0,16 mm und B_{F5} = 0,2 mm ausgebildet. Die Tiefen der Feinrillen 9 bis 13 sind jeweils mit einer Tiefe T_{F} mit 0,6mm≥T_{F}≥0,05mm - beispielsweise mit T_{F}=0,05 mm - ausgebildet.

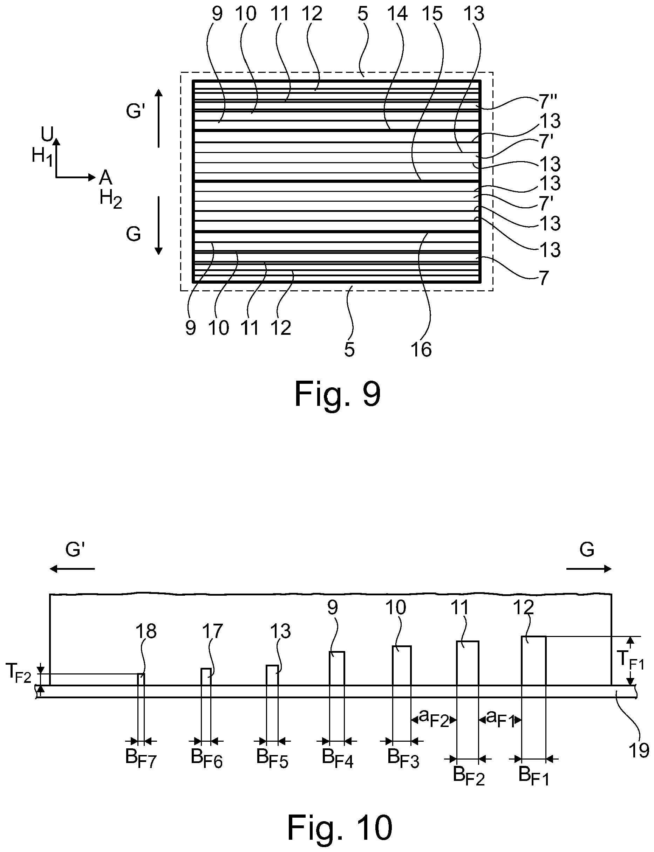

Figur 10 zeigt ein Ausführungsbeispiel eines - wie in den Figuren 1 und 2 dargestellt - ausgebildeten Profilblockelementes 2 im Gleitzustand auf einer beeisten Straßenoberfläche. Die Orientierungsrichtung G ist entgegengesetzt zur wirkenden Gleitrichtung G'. Es ist erkennbar, dass die in Gleitrichtung G' im Oberflächenabschnitt 7 vorgeordnet ausgebildeten feinen Rillen mit ihrer großen Breite B_{F1} und B_{F2} in dem Erstreckungsabschnitt wirken, in welchem der Wasserfilm der Eisschicht 19 seine größte Dicke bildet, und damit auch mit ihrer großen Breite das größte Aufnahmevolumen für Wasser stellen. In dem in Gleitrichtung G' dahinter angeordneten Erstreckungsabschnitt des Oberflächenabschnitts 7, in welchem der durch die Eisschicht gebildete Wasserfilm nur mit einer geringeren Dicke ausgebildet wird, ist das durch die schmaleren, wirksamen Feinrillen 9 und 10 mit ihren kleineren Breiten B_{F3} und B_{F4} zur Verfügung gestellte Aufnahmevolumen für Wasser entsprechend kleiner. In Figur 10 ist zusätzlich ein Ausführungsbeispiel dargestellt, bei dem - anders als in den Figuren 1 und 2 dargestellt - im Oberflächenabschnitt 7 eine Gruppe 8 von sieben hintereinander angeordneten Feinrillen 18, 17, 13, 9, 10, 11, 12 ausgebildet sind. Dabei ist auch hier längs der Orientierungsrichtung G des Oberflächenabschnitts 7 eine Zunahme der Breiten der hintereinander angeordneten Feinrillen 18, 17, 13, 9, 10, 11, 12 ausgebildet. Die Feinrille 18 ist mit ihrer Breite B_{F7} die schmalste, die Feinrille 12 mit ihrer Breite B_{F1} die breiteste.

Darüber hinaus ist in Figur 10 ein weiteres Ausführungsbeispiel dargestellt, bei der im Oberflächenabschnitt 7 längs der Orientierungsrichtung G auch von einer Feinrille zur nächsten Feinrille jeweils die Tiefe T_{F} der Feinrillen zunimmt, so dass die in Orientierungsrichtung G vorgeordnete, erste Feinrille 18 mit kleinster Tiefe T_{F2} und die nachgeordnete, letzte Feinrille 12 mit größter Tiefe T_{F1} ausgebildet ist. Die kleinste Tiefe T_{F2} ist dabei mit T_{F2}≥0,05mm - beispielsweise mit T_{F2}=0,05 mm -, die größte Tiefe T_{F1} ist dabei mit 0,6mm≥T_{F1} - beispielsweise mit T_{F1}=0,1 mm - ausgebildet.

Die Orientierungsrichtung G ist dabei bei einem Fahrzeugreifen, bei dem Profilblockelement 5, welches zum optimalen Bremsen auf Eis ausgelegt ist, in Drehrichtung des montierten Fahrzeugreifens bei Vorwärtsfahrt gewählt.

Die Orientierungsrichtung G ist bei einem Fahrzeugreifen, bei dem das Profilblockelement 5 für einen optimalen Beschleunigungsvorgang auf Eis ausgelegt ist, entgegen der Drehrichtung bei Vorwärtsfahrt des montierten Fahrzeugluftreifens.

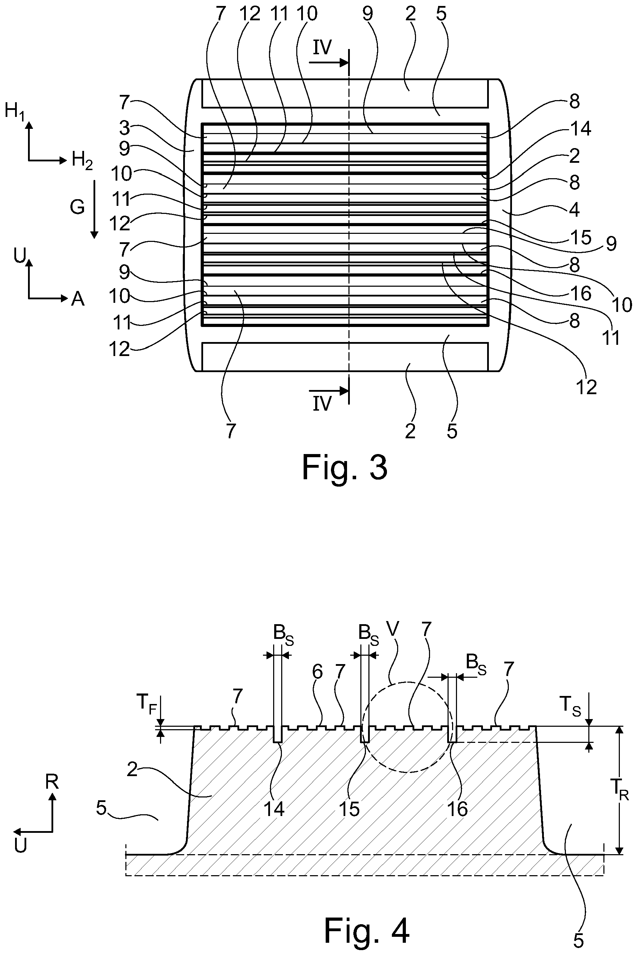

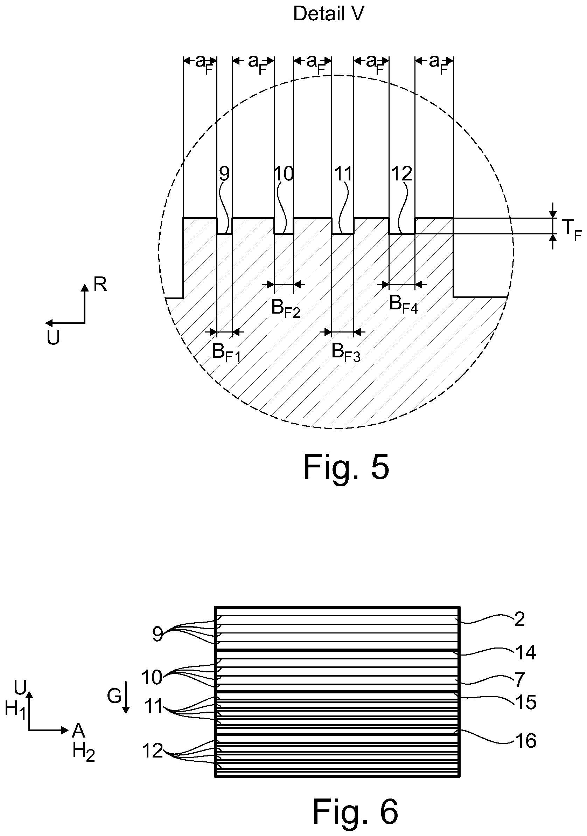

Die Figuren 3 bis 5 zeigen ein weiteres Ausführungsbeispiel, bei welchem das Profilblockelement 2 aus mehreren längs der ersten Haupterstreckungsrichtung H₁ und somit längs der Umfangsrichtung U hintereinander angeordneten Oberflächenelementen 7 ausgebildet ist.

In den Figuren 3, 4 und 5 ist ein Profilblockelement 2 dargestellt, dessen radial äußere Oberfläche 6 aus vier längs der Haupterstreckungsrichtung H₁ - d.h. längs der Umfangsrichtung U - hintereinander angeordneten Oberflächenelementen 7 ausgebildet ist, die jeweils durch in der radial äußeren Oberfläche 6 des Profilblockelementes 2 ausgebildete Feineinschnitte 14, 15 bzw. 16 voneinander getrennt sind. Die Feineinschnitte 14, 15 und 16 sind parallel zueinander ausgerichtet und erstrecken sich ausgehend von der Umfangsrille 3 bis zur Umfangsrille 4. Der in Orientierungsrichtung G vorgeordnete erste Oberflächenabschnitt 7 ist in Orientierungsrichtung G durch eine Querrille 5 und in Orientierungsrichtung G nachgeordnet durch den Feineinschnitt 14 begrenzt. Der dem Feineinschnitt 14 in Orientierungsrichtung G nachfolgend angeordnete Oberflächenabschnitt 7 ist in Orientierungsrichtung G durch den Feineinschnitt 14 und den Feineinschnitt 15 begrenzt. Das dem Feineinschnitt 15 in Orientierungsrichtung G nachfolgend angeordnete Oberflächenelement 7 ist in Orientierungsrichtung G durch den Feineinschnitt 15 und den Feineinschnitt 16 begrenzt. Der dem Feineinschnitt 16 in Orientierungsrichtung G nachfolgend angeordnete Oberflächenelement 7 ist in Orientierungsrichtung G durch den Feineinschnitt 16 sowie durch die dem Profilblockelement 2 in Orientierungsrichtung G nachfolgend angeordnete, das Profilblockelement begrenzende Querrille 5 begrenzt.

Jedes der vier Oberflächenelemente 7 des Profilblockelementes 2 der Figur 3 ist analog zu dem Oberflächenelement 7 von Fig.1 und Fig.2 mit in Haupterstreckungsrichtung H₁ ausgerichteter Orientierungsrichtung G und mit einer Gruppe 8 von in Orientierungsrichtung G hintereinander angeordneten parallel zueinander ausgerichteten, geradlinig erstreckten Feinrillen 9, 10, 11 und 12 ausgebildet. Die Breiten und Tiefen der Feinrillen 9,10,11 und 12 sind - wie im Zusammenhang mit den Figuren 1 und 2 beschrieben - ausgebildet. Somit gilt für die Breiten B_{F1} der Feinrille 9, B_{F2} der Feinrille 10, B_{F3} der Feinrille 11 und B_{F4} der Feinrille 12 der in Orientierungsrichtung G hintereinander angeordneten Feineinschnitte 9, 10, 11 und 12 eines Oberflächenelementes 7 jeweils B_{F1} < B_{F2} < B_{F3} < B_{F4}.

Die Tiefen T_{F} der Feinrillen 9, 10, 11 und 12 sind gleich groß ausgebildet.

In alternativer Ausbildung ist die Tiefe T_{F} der Feinrille 9 kleiner als die Tiefe T_{F} der Feinrille 10 ausgebildet. Die Tiefe T_{F} der Feinrille 10 ist kleiner ausgebildet als die Tiefe T_{F} der Feinrille 11. Die Tiefe T_{F} der Feinrille 11 ist kleiner ausgebildet als die Tiefe T_{F} der Feinrille 12.

Die Abstände a_{F} zwischen den in Orientierungsrichtung G hintereinander angeordneten Feinrillen eines Oberflächenelementes 7 sind jeweils gleich groß ausgebildet.

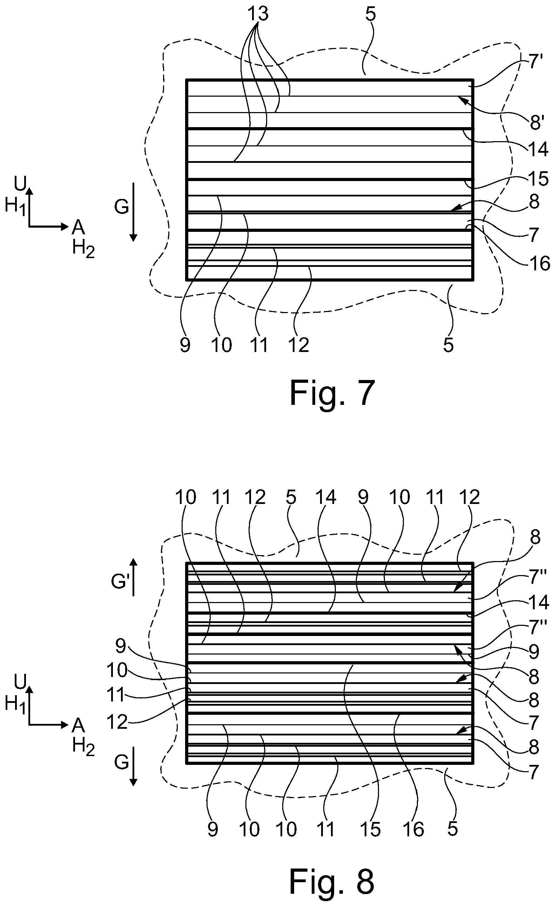

Figur 7 zeigt ein weiteres alternatives Ausführungsbeispiel, bei welchem zwischen der dem Profilblockelement 2 in Orientierungsrichtung G vorgeordneten, das Profilblockelement 2 begrenzenden Querrille 5 und dem Feineinschnitt 15 ein erstes Oberflächenelement 7' und zwischen dem Feineinschnitt 15 und der dem Profilblockelement 2 in Orientierungsrichtung G nachgeordneten, das Profilblockelement 2 begrenzenden Querrille 5 ein Oberflächenelement 7 ausgebildet ist. Das Oberflächenelement 7 ist - wie das im Zusammenhang mit den Figuren 1 und 2 dargestellte und beschriebene Oberflächenelement 7 - mit längs der Orientierungsrichtung G hintereinander angeordneten zusätzlichen Feinrillen 9, 10, 11 und 12 mit in Orientierungsrichtung G von Feineinschnitt zu Feineinschnitt jeweils zunehmender Breite der Feineinschnitte ausgebildet. Die Breite B_{F1} der Feinrille 9 ist somit kleiner als die Breite B_{F2} der Feinrille 10. Die Breite B_{F2} der Feinrille 10 ist kleiner als die Breite B_{F3} der Feinrille 11. Die Breite B_{F3} der Feinrille 11 ist kleiner als die Breite B_{B4} der Feinrille 12. Zwischen der Feinrille 10 und der Feinrille 11 ist im dargestellten Ausführungsbeispiel der Feineinschnitt 16 in dem Oberflächenelement 7 ausgebildet. Somit sind auch bei diesem Ausführungsbeispiel die im Oberflächenelement 7 zwischen Feineinschnitt 15 und der in Orientierungsrichtung G nachfolgenden Querrille 5 ausgebildeten Feinrillen 9,10,11 und 12 mit einer längs der Haupterstreckungsrichtung H₁ des Oberflächenelementes 7 in Orientierungsrichtung G zunehmender Breite der hintereinander angeordneten Feinrillen 9,10,11 und 12 ausgebildet. Die Feinrillen 9, 10, 11 und 12 bilden somit wiederum eine Gruppe 8 von Feinrillen des Oberflächenelements 7.

Im Oberflächenelement 7' ist eine Gruppe 8' von in Haupterstreckungsrichtung H₁ hintereinander angeordneten Feinrillen 13 ausgebildet, die jedoch jeweils mit einer gleicher Breite ausgebildet sind, wobei die Breite der Feinrillen 13 kleiner ist als die Breite B_{F1} der Feinrille 9.

Die Feinrillen 13 der Gruppe 8' sind wie die Feinrillen 9,10,11 und 12 der Gruppe 8 jeweils mit der Tiefe T_{F} ausgebildet.

Figur 8 zeigt ein alternatives Ausführungsbeispiel eines Profilblockelementes, bei welchem in der radial äußeren Oberfläche 6 in Haupterstreckungsrichtung H₁ hintereinander angeordnet zwei Oberflächenelemente 7 und zwei Oberflächenelemente 7" ausgebildet sind. Die beiden Oberflächenelemente 7 sind durch den Feineinschnitt 16, die beiden Oberflächenelemente 7" sind durch den Feineinschnitt 14 voneinander getrennt. Die Ausbildung ist analog zur Ausbildung von Figur 7 ausgebildet, wobei jedoch zwischen dem Feineinschnitt 15 und der in Orientierungsrichtung G dem Feineinschnitt nachfolgend das Profilblockelement 2 begrenzenden Querrille 5 zwei Oberflächenelemente 7 und zwischen dem Feineinschnitt 15 und der in Orientierungsrichtung G dem Feineinschnitt 15 vorgeordnet das Profilblockelement 2 begrenzenden Querrille 5 zwei Oberflächenelemente 7" ausgebildet sind. Die Gruppe 8 der Feinrillen 9,10,11 und 12 der Oberflächenelemente 7" sind dabei spiegelbildlich zu der Gruppe 8 der Feinrillen 9,10,11 und 12 der Oberflächenelemente 7 angeordnet. Somit sind die Feinrillen 9,10,11 und 12 im Oberflächenelement 7" entgegen der Orientierungsrichtung G und damit in einer Orientierungsrichtung G' von Feineinschnitt zu Feineinschnitt zunehmender Breite hintereinander angeordnet.

Figur 9 zeigt ein weiteres Ausführungsbeispiel, bei welchem wie im Ausführungsbeispiel von Figur 8 jeweils zwischen Feineinschnitt 14 und benachbarter Querrille 5 ein Oberflächenabschnitt 7" und zwischen Feineinschnitt 16 und zu diesem benachbarter Querrille 5 ein Oberflächenabschnitt 7 ausgebildet ist. Zwischen Feineinschnitt 14 und Feineinschnitt 15 sowie zwischen Feineinschnitt 15 und Feineinschnitt 16 ist jeweils ein Oberflächenabschnitt 7' ausgebildet, in welchem - wie bei dem Oberflächenabschnitt 7' des in Figur 7 dargestellten Ausführungsbeispiels - je eine Gruppe 8 von in Haupterstreckungsrichtung H₁ hintereinander angeordneten parallelen, geradlinigen Feinrillen 13 gleicher Breite ausgebildet sind. Die Breite der Feinrillen 13 ist kleiner als die Breite F_{B1} der schmalsten Feinrille 9 der Oberflächenabschnitte 7 und 7".

Die Ausführungsbeispiele von Figur 8 und Figur 9 sind durch die spiegelbildliche Ausbildung besonders geeignet für die Erfordernisse von Profilblockelementen, die sowohl für gutes Bremsen auf Eis als auch für gute Traktion auf Eis ausgelegt sind.

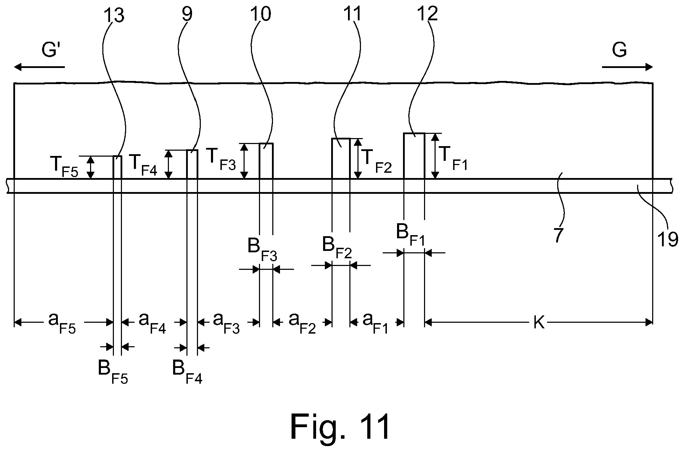

Figur 11 zeigt eine Darstellung eines Oberflächenelementes 7 im Kontakt mit der Eisoberfläche der Straße analog zur Darstellung von Figur 10 mit fünf Feinrillen 13,9,10, 11 und 12. Die in der der Gleitrichtung entsprechenden Orientierungsrichtung G' vorgeordnete, letzte Feinrille 12 mit der größten Breite B_{F1} ist in einem Abstand K von dem zur Feinrille 12 benachbarten, das Oberflächenelement 7 begrenzenden Feineinschnitt bzw. Querrille ausgebildet. Der Abstand K ist bei dieser dargestellten Ausführung deutlich größer gewählt als die jeweils zwischen zwei hintereinander angeordneten, benachbarten Feinrillen ausgebildeten Abstände. Dabei ist zwischen den benachbarten Feinrillen 11 und 12 ein Abstand a_{F1} ausgebildet. Zwischen den benachbarten Feinrillen 11 und 10 ist ein Abstand a_{F2} ausgebildet. Zwischen den benachbarten Feinrillen 10 und 9 ist ein Abstand a_{F3} ausgebildet. Zwischen den benachbarten Feinrillen 9 und 13 ist ein Abstand a_{F4} ausgebildet. Zwischen der Feinrille 13 mit kleinster Breite B_{F5} und der(dem) benachbarten, das Profiloberflächenelement 7 in Orientierungsrichtung G begrenzenden Querrille oder Feineinschnitt ist ein Abstand a_{F5} ausgebildet. Die Abstände sind jeweils in der radial äußeren Oberfläche des Profilblockelementes im unbelasteten Zustand gemessen.

In einem Ausführungsbeispiel ist K>a_{F5} = a_{F4} = a_{F3} = a_{F2} = a_{F1} gewählt. Im dargestellten Ausführungsbeispiel ist K>a_{F5} > a_{F4} > a_{F3} > a_{F2} > a_{F1} gewählt. Die große Auslegung des Abstandes K berücksichtigt dabei das Entstehen einer Abhebezone beim Gleiten eines Oberflächenelementes 7 in dem entgegen der Gleitrichtung G' hinteren Erstreckungsabschnitt eines Oberflächenelementes. Bei einem Profilblockelement eines Reifen, bei dem eine solche Abhebezone möglich oder gewünscht ist, ist eine derartige Ausbildung mit K > A_{F5} sinnvoll.

In einem nicht dargestellten Ausführungsbeispiel ist die erste Haupterstreckungsrichtung H₁ anders als in den Figuren dargestellten und oben beschriebenen Ausführungen nicht die Umfangsrichtung U, sondern die axiale Richtung A des Reifens. Die zweite Haupterstreckungsrichtung ist die Umfangsrichtung U. Die Orientierungsrichtung G ist bei diesem Ausführungsbeispiel die am montierten Reifen am Fahrzeug zur Fahrzeugaußenseite weisende Erstreckungsrichtung. Die Auslegung ermöglicht dann eine optimierte Wasseraufnahme auf der Eisoberfläche beim Handling.

### Bezugszeichenliste

### (Teil der Beschreibung)

- 1: Profilblockreihe
- 2: Profilblockelement
- 3: Umfangsrille
- 4: Umfangsrille
- 5: Querrille
- 6: Radial äußere Oberfläche
- 7: Oberflächenelement
- 8: Gruppe von Feinrillen
- 9: Feinrille
- 10: Feinrille
- 11: Feinrille
- 12: Feinrille
- 13: Feinrille
- 14: Feineinschnitt
- 15: Feineinschnitt
- 16: Feineinschnitt
- 17: Feinrille
- 18: Feinrille
- 19: Eisschicht

## Patentansprüche

1. Laufstreifenprofil eines Fahrzeugluftreifens mit durch Profilrillen (3,4,5) von einander beabstandeten Profilblockelementen (2), welche in radialer Richtung nach außen hin jeweils durch eine radial äußere, die Bodenkontaktfläche bildende Oberfläche (6) begrenzt sind, wobei in der radial äußeren Oberfläche (6) zumindest mancher Profilblockelemente (2) längs einer ersten Haupterstreckungsrichtung hintereinander angeordnet mehrere zusätzliche Feinrillen (9,10,11,12) angeordnet sind, die längs einer zweiten Haupterstreckungsrichtung erstreckt und mit einer Rillenbreite B_{F} **mit 0,05mm≤B_{F}≤0,4mm** und mit einer Rillentiefe T_{F} ausgebildet sind,
**dadurch gekennzeichnet,**
**dass** die Rillentiefe T_{F} mit 0,6mm≥T_{F}≥0,05mm ausgebildet ist, und
**dass** zumindest die innerhalb eines Oberflächenabschnitts (7) der radial äußeren Oberfläche (6) eines Profilblockelementes (2) hintereinander angeordneten Feinrillen (9,10,11,12) mit unterschiedlicher Rillenbreite B_{F} ausgebildet sind, wobei die Rillenbreite B_{F} dieser im Oberflächenabschnitt (7) hintereinander angeordneten Feinrillen (9,10,11,12) in einer ersten Orientierung der ersten Haupterstreckungsrichtung gesehen längs der Erstreckung des Oberflächenabschnittes (7) - insbesondere von Feinrille (9,10,11) zu Feinrille (10,11,12) - zunimmt.

2. Laufstreifenprofil gemäß den Merkmalen von Anspruch 1,
wobei die zumindest innerhalb dieses Oberflächenabschnittes (7) der radial äußeren Oberfläche (6) des Profilblockelementes (2) hintereinander angeordneten Feinrillen (9,10,11,12) zusätzlich mit unterschiedlicher Rillentiefe T_{F} ausgebildet sind, wobei die Rillenbreite T_{F} dieser im Oberflächenabschnitt (7) hintereinander angeordneten Feinrillen(9,10,11,12) in der ersten Orientierung der ersten Haupterstreckungsrichtung gesehen - insbesondere von Feinrille (9,10,11) zu Feinrille (10,11,12) - zunimmt.

3. Laufstreifenprofil gemäß den Merkmalen von Anspruch 1 oder 2,
wobei in erster Haupterstreckungsrichtung gesehen benachbart hintereinander angeordnete Feinrillen im Abstand a_{F} mit 0,05mm≤a_{F}≤5,0mm zueinander angeordnet sind, und
wobei insbesondere die Abstände a_{F} der jeweils benachbart hintereinander angeordneten Feinrillen (9,10,11,12) zumindest innerhalb dieses Oberflächenabschnittes (7) der radial äußeren Oberfläche (6) des Profilblockelementes (2) zusätzlich unterschiedlich groß ausgebildet sind, wobei der Abstand a_{F} dieser im Oberflächenabschnitt jeweils benachbart hintereinander angeordneten Feinrillen (9,10,11,12) in der ersten Orientierung der ersten Haupterstreckungsrichtung gesehen von Abstand a_{F} zweier benachbart angeordneten Feinrillen (9,10,11) zum Abstand der nächsten, benachbart angeordneten Feinrillen (10,11,12) hin abnimmt.

4. Laufstreifenprofil gemäß den Merkmalen von einem oder mehreren der vorangegangenen Ansprüche,
wobei die Feinrillen (9,10,11,12) in der radial äußeren Oberfläche (6) geradlinig erstreckt ausgebildet sind.

5. Laufstreifenprofil gemäß den Merkmalen von einem oder mehreren der vorangegangenen Ansprüche,
wobei die Feinrillen (9,10,11,12) in der radial äußeren Oberfläche (6) über die gesamte in der Position der Feinrille (9,10,11,12) längs der zweiten Haupterstreckungsrichtung ausgebildete Erstreckungslänge des Profilblockelementes (2) erstreckt ausgebildet sind.

6. Laufstreifenprofil gemäß den Merkmalen von einem oder mehreren der vorangegangenen Ansprüche,
wobei der Oberflächenabschnitt (7) durch längs der ersten Haupterstreckungsrichtung durch das Profilblockelement (2) begrenzende Rillen (5) und/oder durch in der radial äußeren Oberfläche (6) hintereinander angeordnete Feineinschnitte (14,15,16) begrenzt wird.

7. Laufstreifenprofil gemäß den Merkmalen von einem oder mehreren der vorangegangenen Ansprüche,
wobei in der Oberfläche (6) des Profilblockelementes längs der ersten Haupterstreckungsrichtung hintereinander mehrere derartige Oberflächenelemente (7) ausgebildet sind.

8. Laufstreifenprofil gemäß den Merkmalen von einem oder mehreren der vorangegangenen Ansprüche,
wobei die erste Haupterstreckungsrichtung die Umfangsrichtung U des Reifens und die zweite Haupterstreckungsrichtung die axiale Richtung A des Reifens ist.

9. Laufstreifenprofil gemäß den Merkmalen von einem oder mehreren der Ansprüche 1 bis 7,
wobei die erste Haupterstreckungsrichtung die axiale Richtung A des Reifens und die zweite Haupterstreckungsrichtung die Umfangsrichtung U des Reifens ist.

## Claims

1. Tread profile of a pneumatic vehicle tyre having profile block elements (2) which are spaced apart from one another by profile grooves (3, 4, 5) and in the radial direction are in each case bounded outwardly by a radially outer surface (6) that forms the ground contact area, a plurality of additional fine grooves (9, 10, 11, 12), which are made to extend along a second main direction of extent and are formed with a groove width B_{F}, where 0.05 mm ≤ B_{F} ≤ 0.4 mm, and with a groove depth T_{F}, being arranged one behind the other in a first main direction of extent in the radially outer surface (6) of at least some profile block elements (2), **characterized**
**in that** the groove depth T_{F} is formed with 0.6 mm ≥ T_{F} ≥ 0.05 mm, and in that at least the fine grooves (9, 10, 11, 12) arranged one behind the other within a surface portion (7) of the radially outer surface (6) of a profile block element (2) are formed with different groove widths B_{F}, the groove width B_{F} of these fine grooves (9, 10, 11, 12) arranged one behind the other in the surface portion (7) increasing along the extent of the surface portion (7), when viewed in a first orientation of the first main direction of extent - in particular from fine groove (9, 10, 11) to fine groove (10, 11, 12).

2. Tread profile according to the features of Claim 1, the fine grooves (9, 10, 11, 12) arranged one behind the other at least within this surface portion (7) of the radially outer surface (6) of the profile block element (2) being additionally formed with different groove depths T_{F}, the groove depth T_{F} of these fine grooves (9, 10, 11, 12) arranged one behind the other in the surface portion (7) increasing, when viewed in the first orientation of the first main direction of extent - in particular from fine groove (9, 10, 11) to fine groove (10, 11, 12).

3. Tread profile according to the features of Claim 1 or 2,
fine grooves arranged adjacently one behind the other being arranged, when viewed in the first main direction of extent, with the spacing a_{F} from one another, where 0.05 mm ≤ a_{F} ≤ 5.0 mm, and
in particular the spacings a_{F} of the fine grooves (9, 10, 11, 12) respectively arranged adjacently one behind the other additionally being formed with different sizes, at least within this surface portion (7) of the radially outer surface (6) of the profile block element (2), the spacing a_{F} of these fine grooves (9, 10, 11, 12) respectively arranged adjacently one behind the other decreasing, when viewed in the first orientation of the first main direction of extent, from the spacing a_{F} of two adjacently arranged fine grooves (9, 10, 11) to the spacing of the next, adjacently arranged fine grooves (10, 11, 12).

4. Tread profile according to the features of one or more of the preceding claims,
the fine grooves (9, 10, 11, 12) being formed such that they are made to extend in a straight line in the radially outer surface (6).

5. Tread profile according to the features of one or more of the preceding claims,
the fine grooves (9, 10, 11, 12) being formed such that they are made to extend in the radially outer surface (6) over the entire length of extent of the profile block element (2), formed along the second main direction of extent in the position of the fine groove (9, 10, 11, 12).

6. Tread profile according to the features of one or more of the preceding claims,
the surface portion (7) being bounded by grooves (5) delimiting along the first main direction of extent through the profile block element (2) and/or by sipes (14, 15, 16) arranged one behind the other in the radially outer surface (6).

7. Tread profile according to the features of one or more of the preceding claims,
a number of such surface elements (7) being formed in the surface (6) of the profile block element one behind the other along the first main direction of extent.

8. Tread profile according to the features of one or more of the preceding claims,
the first main direction of extent being the circumferential direction U of the tyre and the second main direction of extent being the axial direction A of the tyre.

9. Tread profile according to the features of one or more of Claims 1 to 7,
the first main direction of extent being the axial direction A of the tyre and the second main direction of extent being the circumferential direction U of the tyre.

## Revendications

1. Profil de bande de roulement d'un pneu de véhicule avec des éléments de barrette de bande de roulement (2) éloignés les uns des autres par des rainures de la bande de roulement (3, 4, 5), lesquels sont limités dans le sens radial vers l'extérieur respectivement par une surface (6) radialement extérieure, formant la surface de contact au sol, dans la surface radialement extérieure (6) au moins de certains éléments de barrette de bande de roulement (2) plusieurs fines rainures (9, 10, 11, 12) supplémentaires disposées les unes derrière les autres étant disposées le long d'une première direction d'extension principale, qui sont étendues le long d'une deuxième extension principale et sont constituées avec une largeur de rainure B_{F} de 0,05 mm ≤ B_{F} ≤ 0,4 mm et avec une profondeur de rainure T_{F},
**caractérisé en ce que**
la profondeur de rainure T_{F} est constituée à 0,6 mm ≥ T_{F} ≥ 0,05 mm et **en ce qu'**au moins les fines rainures (9, 10, 11, 12) disposées les unes derrière les autres à l'intérieur d'une section de surface (7) de la surface radialement extérieure (6) d'un élément de barrette de bande de roulement (2) sont constituées avec une largeur de rainure B_{F} différente, la largeur de rainure B_{F} de ces fines rainures (9, 10, 11, 12) disposées les unes derrière les autres dans la section de surface (7) augmentant dans une première orientation de la première direction d'extension principale vue le long de l'extension de la section de surface (7), notamment de la fine rainure (9, 10, 11) à la fine rainure (10, 11, 12).

2. Profil de bande de roulement selon les caractéristiques de la revendication 1,
les fines rainures (9, 10, 11, 12) disposées les unes derrière les autres au moins à l'intérieur de cette section de surface (7) de la surface radialement extérieure (6) de l'élément de barrette de bande de roulement (2) étant constituées en plus avec une profondeur de rainure différente T_{F}, la largeur de rainure T_{F} de ces fines rainures (9, 10, 11, 12) disposées les unes derrière les autres dans la section de surface (7), vues dans la première orientation de la première direction d'extension principale, augmentant, notamment de la fine rainure (9, 10, 11) à la fine rainure (10, 11, 12).

3. Profil de bande de roulement selon les caractéristiques de la revendication 1 ou 2,
les fines rainures disposées de façon adjacente les unes derrière les autres vues dans la première direction d'extension principale étant disposées à une distance a_{F} de 0,05 mm ≤ a_{F} ≤ 5,0 mm les unes par rapport aux autres, et
en particulier les distances a_{F} des fines rainures (9, 10, 11, 12) respectivement disposées de façon adjacente les unes derrière les autres étant constituées au moins à l'intérieur de cette section de surface (7) de la surface radialement extérieure (6) de l'élément de barrette de bande de roulement (2) en plus de taille différente, la distance a_{F} de ces fines rainures (9, 10, 11, 12) disposées respectivement de façon adjacente les unes derrière les autres dans la section de surface diminuant vues dans la première orientation de la première extension principale de la distance a_{F} de deux fines rainures (9, 10, 11) disposées de façon adjacente à la distance des fines rainures (10, 11, 12) suivantes disposées de façon adjacente.

4. Profil de bande de roulement selon les caractéristiques de l'une quelconque ou de plusieurs des revendications précédentes,
les fines rainures (9, 10, 11, 12) étant constituées étendues en ligne droite dans la surface radialement extérieure (6).

5. Profil de bande de roulement selon les caractéristiques de l'une quelconque ou de plusieurs des revendications précédentes,
les fines rainures (9, 10, 11, 12) étant constituées étendues dans la surface radialement extérieure (6) sur toute la longueur d'extension de l'élément de barrette de bande de roulement (2) constituée dans la position de la fine rainure (9, 10, 11, 12) le long de la deuxième direction d'extension principale.

6. Profil de bande de roulement selon les caractéristiques de l'une quelconque ou de plusieurs des revendications précédentes,
la section de surface (7) étant limitée le long de la première direction d'extension principale par le rainurage (5) limitant par l'élément de barrette de bande de roulement (2) et/ou par les fines entailles (14, 15, 16) disposées les unes derrière les autres dans la surface radialement extérieure (6).

7. Profil de bande de roulement selon les caractéristiques de l'une quelconque ou de plusieurs des revendications précédentes,
plusieurs éléments de surface (7) de ce type étant constitués les uns derrière les autres dans la surface (6) de l'élément de barrette de bande de roulement le long de la première direction d'extension principale.

8. Profil de bande de roulement selon les caractéristiques de l'une quelconque ou de plusieurs des revendications précédentes,
la première direction d'extension principale étant la direction périphérique U du pneu et la deuxième direction d'extension principale la direction axiale A du pneu.

9. Profil de bande de roulement selon les caractéristiques de l'une quelconque ou de plusieurs des revendications 1 à 7,
la première direction d'extension principale étant la direction axiale A du pneu et la deuxième direction d'extension principale étant la direction périphérique U du pneu.
